# EUROPÄISCHE PATENTANMELDUNG

(11) **EP 1 519 462 A2**
(43) Veröffentlichungstag der Anmeldung: **30.03.2005**
(21) Anmeldenummer: 04400052.9
(22) Anmeldetag: 22.09.2004
(51) Int. Cl.: H02G 1/12

(54) **Vorrichtung zum abisolieren eines Stromleiters**

(30) Priorität: 23.09.2003 DE 20314835 U
(71) Anmelder: ESV Werkzeuge und Zubehör für die elekrische Stromverteilung GMBH, 96472 Rödental (DE)
(72) Erfinder: Gänslein, Hans-Gunther, 96472 Rödental (DE)
(74) Vertreter: Uhlemann, Henry, Dipl.-Chem.

(57) **Zusammenfassung**

Die Erfindung betrifft eine Vorrichtung zum Abisolieren eines Stromleiters und ist gekennzeichnet durch einen Grundkörper (1) mit einer Bohrung (3) zum Aufnehmen eines Stromleiters (2), welche Bohrung (3) einenends eine Eintrittsöffnung (3a) und anderenends eine Arbeitsöffnung (3b) in einer axial gegen die Bohrung (3) um einen Steigungswinkel (α) geneigten Arbeitsebene (A-A) aufweist, einen am Grundkörper (1) befestigter Messerträger (5), der mit einer Stützfläche (12) zur Schnitttiefenbegrenzung federnd oder fest gegen die Isolation des Stromleiters (2) gedrückt wird und in welchem entlang besagter Arbeitsebene (A-A) ein die Isolation des Stromleiters (2) durchdringendes Messer (8) gelagert ist, sowie einer am Messerträger (5) vorgesehenen Schälfläche (10), welche etwa tangential gegen den Stromleiter (2) gerichtet ist und neben der Schneidkante (9) des Messers (8) endet.

## Beschreibung

Die Erfindung betrifft eine Vorrichtung zum Abisolieren eines Stromleiters.

Mittels bekannter Vorrichtungen dieser Art werden Rund- und Längsschnitte in der Isolation von Stromleitern ausgeführt, um diese Isolation streckenweise entfernen zu können. Mitunter haften die Isolationen derart hartnäckig an den metallischen Leiterkernen, dass sich das Entfernen der Isolation schwierig gestaltet.

Aufgabe der Erfindung ist das Schaffen einer Vorrichtung, die das Entfernen der Isolation erleichtert.

Erfindungsgemäß wird das erreicht durch einen Grundkörper mit einer Bohrung zum Aufnehmen eines Stromleiters, welche Bohrung einenends eine Eintrittsöffnung und anderenends eine Arbeitsöffnung in einer axial gegen die Bohrung um einen Steigungswinkel geneigten Arbeitsebene aufweist, einen am Grundkörper befestigten Messerträger, der mit einer Stützfläche zur Schnitttiefenbegrenzung federnd oder fest gegen die Isolation des Stromleiters gedrückt wird und in welchem entlang besagter Arbeitsebene ein die Isolation des Stromleiters durchdringendes Messer gelagert ist, sowie einer am Messerträger vorgesehenen Schälfläche, welche etwa tangential gegen den Stromleiter gerichtet ist und neben der Schneidkante des Messers endet. Zweckmäßig weist der Messerträger einen elastischen Abschnitt auf, über den der Messerträger mit dem Grundkörper verbunden ist. Von Vorteil ist, wenn der Messerträger um einen axial gegen die Bohrung geneigten Steigungswinkel am Grundkörper befestigt ist. Empfehlenswerten Ausführungen zufolge sind Messer im Messerträger bzw. der Messerträger Grundkörper auswechselbar. Vorzugsweise ist im Grundkörper ein verstellbarer Anschlag zum Begrenzen einer abzuisolierenden Strecke vorgesehen, welcher Anschlag zweckmäßig mittels Öffnungen im Grundkörper arretierbar ist.

Die Erfindung ist an Erfindung eines dargestellten und beschriebenen Ausführungsbeispielen erläutert. Es zeigen:
- Fig. 1: eine Vorrichtung zum Abisolieren,

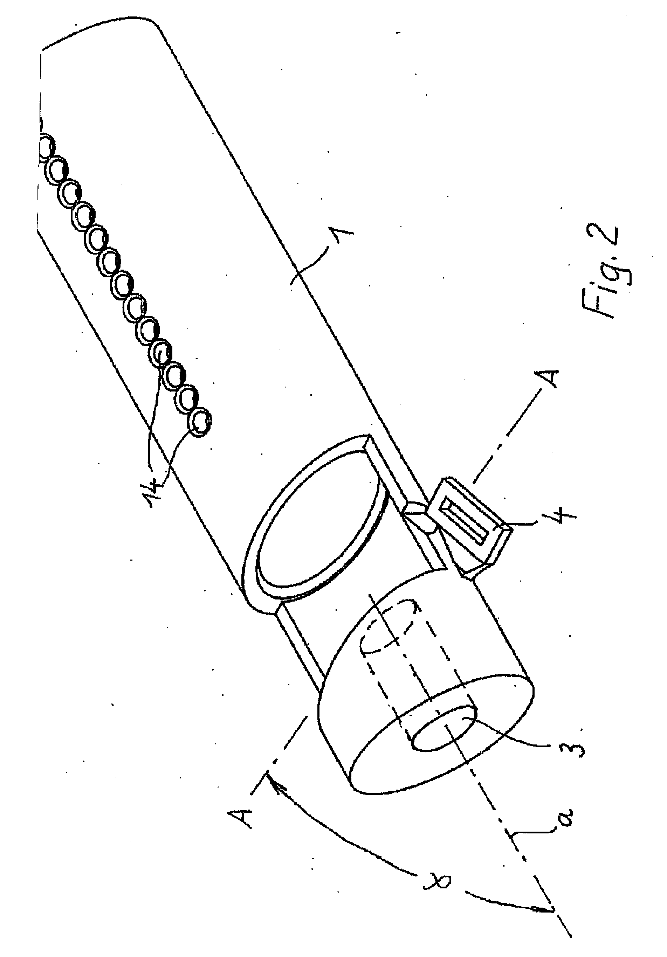

- Fig. 2: den Grundkörper,
- Fig. 3: den Messerträger mit ausgezogenem Messer und
- Fig. 4: eine Arbeitsansicht der Vorrichtung.

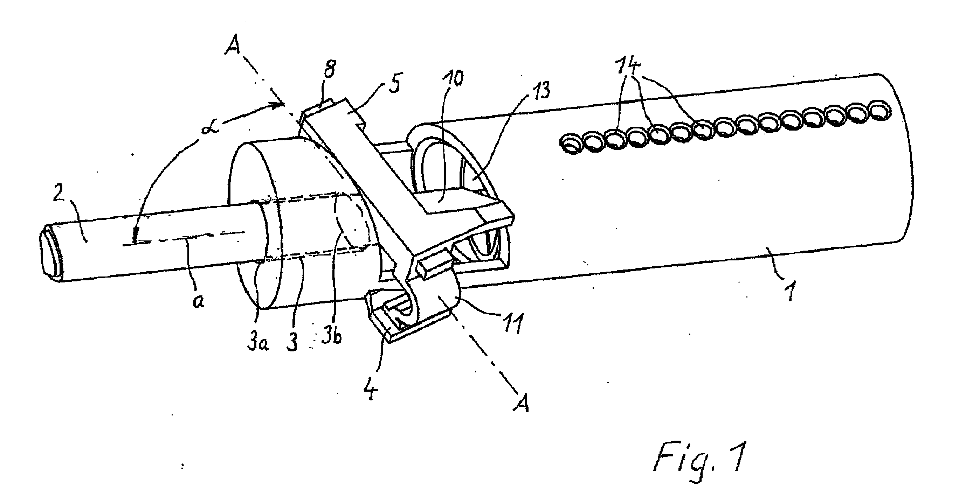

Im aus Kunststoff bestehenden Grundkörper 1 (vergl. Fig. 1) einer erfindungsgemäßen Vorrichtung ist zum Aufnehmen eines Stromleiters 2 eine Bohrung 3 vorgesehen. Die dem Durchmesser des Stromleiters 2 angepasste Bohrung 3 weist eine stirnseitige Eintrittsöffnung 3a sowie eine hintere Arbeitsöffnung 3b auf. Die Arbeitsöffnung 3b liegt in der Arbeitsebene A-A, welche um den Steigungswinkel α gegen die Seele a der Bohrung 3 geneigt ist.

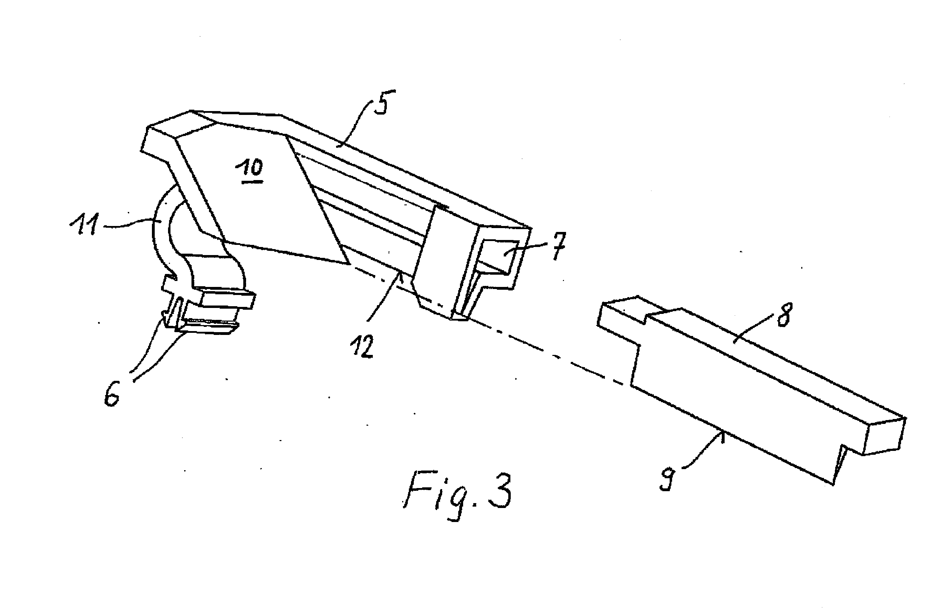

In einem Flansch 4 des Grundkörpers 1 ist der ebenfalls aus Kunststoff bestehende Messerträger 5 befestigt. Der Messerträger 5 klemmt mittels Spreizbacken 6 im Flansch 4 (vergl. Fig. 3). Dieser Befestigung zufolge kann der Messerträger 5 ausgetauscht werden. Ein elastischer Abschnitt 11 des Messerträgers 5 sorgt dafür, dass der Messerträger 5 mit einer Stützfläche 12 federnd gegen die Isolation des Stromleiters 2 gedrückt wird. Im Messerträger 5 ist die Führung 7 vorgesehen, in welche das Messer 8 einschiebbar ist. Das aus harter Keramik bestehende Messer 8 besitzt die Schneidkante 9, die entsprechend der Dicke der Isolation die Stützfläche 12 überragt.

Der Messerträger 5 weist die Schälfläche 10 auf, die etwa tangential gegen den Stromleiter 2 geneigt ist und neben der Schneidkante 9 des Messers 8 endet.

Im rückwärtigen Teil des Grundkörpers 1 ist der Anschlag 13 angeordnet. Der Anschlag 13 kann im Sinne der Seele a der Bohrung 3 verschoben und in Öffnungen 14 des Grundkörpers 1 arretiert werden.

### Die Wirkungsweise der Vorrichtung ist folgende:

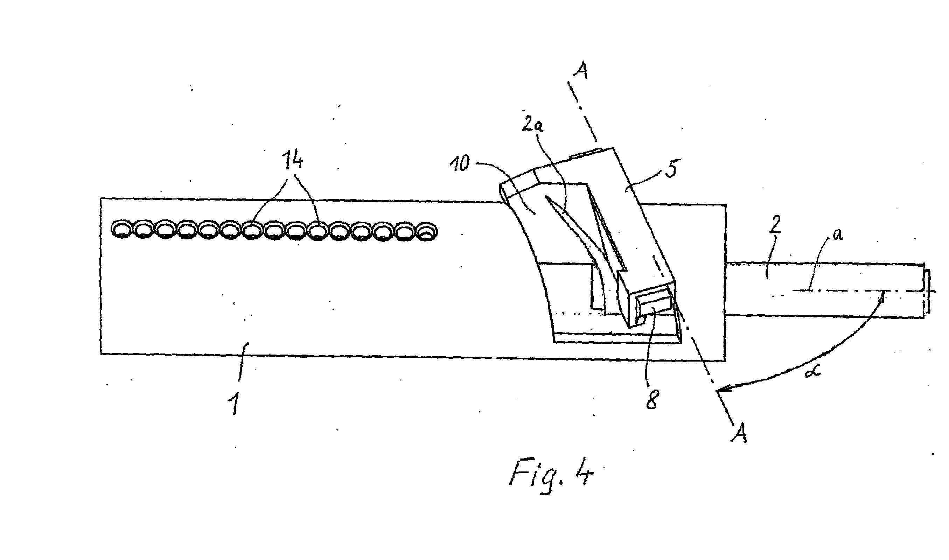

Zunächst wird der Anschlag 13 mittels der Öffnungen 14 im Grundkörper 1 entsprechend der am Stromleiter 2 abzuisolierenden Strecke arretiert. Dann kann der zu bearbeitende Stromleiter 2 durch die Eintrittsöffnung 3a bis zur Berührung mit dem Messer 8 in die Bohrung 3 gesteckt werden (vergl. Fig. 4).

Beim Drehen des Grundkörpers 1 im Uhrzeigersinn gegenüber dem Stromleiter 2 dringt die Schneidkante 9 des Messers 8 infolge des Steigungswinkels α in die Isolation des Stromleiters 2. Während weiterem Drehen der Vorrichtung hebt die Schälfläche 10 des Messerträgers 5 die spiralförmig von der Schneidkante 9 abgetrennte Isolation vom metallischen Kern des Stromleiters 2 ab. Dieses spiralförmige Abtrennen der Isolation 2a wird so lange fortgesetzt, bis der metallische Kern des Stromleiters 2 den im Grundkörper 1 arretierten Anschlag 13 erreicht.

Infolge des federnd gegen die Isolation des Stromleiters 2 gedrückten Messerträgers 5 können sowohl Stromleiter mit kreisrundem Querschnitt als auch so genannte Sektorenleiter zwecks Entfernen deren Isolation bearbeitet werden. Der federnde Messerträger 5 folgt mittels der Stützfläche 12 dem jeweiligen Leiterdurchmesser. Unterschiede im Durchmesser eines Stromleiters werden durch Abtasten des Leiterumfanges berücksichtigt.

Die Erfindung ist nicht auf das dargestellte und beschriebene Ausführungsbeispiel beschränkt. Denkbar ist auch, dass der Grundkörper 2 nicht rohrförmig, sondern prismatisch und damit griffiger gestaltet sein kann. Ebenfalls können Einsätze mit Bohrungen 3 unterschiedlichen Durchmessers für verschiedene Leiterdicken vorgesehen sein. Wesentlich ist stets, dass die Isolation spiralförmig vom Stromleiter abgeschält wird und Schnitttiefenbegrenzung, Messer und Schälfläche eine federnde Einheit bilden.

## Patentansprüche

1. Vorrichtung zum Abisolieren eines Stromleiters, **gekennzeichnet durch** einen Grundkörper (1) mit einer Bohrung (3) zum Aufnehmen eines Stromleiters (2), welche Bohrung (3) einenends eine Eintrittsöffnung (3a) und anderenends eine Arbeitsöffnung (3b) in einer axial gegen die Bohrung (3) um einen Steigungswinkel (α) geneigten Arbeitsebene (A-A) aufweist, einen am Grundkörper (1) befestigter Messerträger (5), der mit einer Stützfläche (12) zur Schnitttiefenbegrenzung federnd oder fest gegen die Isolation des Stromleiters (2) gedrückt wird und in welchem entlang besagter Arbeitsebene (A-A) ein die Isolation des Stromleiters (2) durchdringendes Messer (8) gelagert ist, sowie einer am Messerträger (5) vorgesehenen Schälfläche (10), welche etwa tangential gegen den Stromleiter (2) gerichtet ist und neben der Schneidkante (9) des Messers (8) endet.

2. Vorrichtung nach Anspruch 1, **gekennzeichnet dadurch, dass** der Messerträger (5) einen elastischen Abschnitt (11) aufweist, über den der Messerträger (5) mit dem Grundkörper (1) verbunden ist.

3. Vorrichtung nach Anspruch 1 oder 2, **gekennzeichnet dadurch, dass** der Messerträger (5) um einen axial gegen die Bohrung (3) geneigten Steigungswinkel (α) am Grundkörper (1) befestigt ist.

4. Vorrichtung nach Anspruch 1, 2 oder 3, **gekennzeichnet durch** ein im Messerträger (5) auswechselbar angeordnetes Messer (8).

5. Vorrichtung nach einem der Ansprüche 1 bis 4, **gekennzeichnet durch** einen am Grundkörper (1) auswechselbar angeordneten Messerträger (5).

6. Vorrichtung nach einem der vorhergehenden Ansprüche, **gekennzeichnet durch** einen im Grundkörper (1) verstellbaren Anschlag (13) zum Begrenzen einer am Stromleiter (2) abzuisolierenden Strecke.

7. Vorrichtung nach Anspruch 6, **gekennzeichnet durch** im Grundkörper (1) in axialem Abstand voneinander angeordnete Öffnungen (14) zum Arretieren des für das Begrenzen einer abzuisolierenden Strecke vorgesehenen Anschlages (13).
